# EUROPEAN PATENT SPECIFICATION

(11) **EP 1 891 542 B1**
(45) Date of publication and mention of the grant of the patent: **25.07.2018**
(21) Application number: 06760331.6
(22) Date of filing: 23.05.2006
(51) Int. Cl.: G06F 15/173, H04L 29/08, H04L 12/24, G08B 25/00, G08B 25/08, H04L 12/701, H04L 12/725, H04L 12/707

(54) **METHOD AND SYSTEM FOR TRANSMITTING DATA OVER A NETWORK BASED ON EXTERNAL NON-NETWORK STIMULUS**
VERFAHREN UND SYSTEM ZUM ÜBERTRAGEN VON DATEN ÜBER EIN NETZ AUF DER BASIS EINES EXTERNEN, NICHT ZUM NETZ GEHÖRENDEN AUSLÖSEIMPULSES
PROCEDE ET SYSTEME DE TRANSMISSION DE DONNEES SUR UN RESEAU SUR LA BASE D'UN STIMULUS EXTERNE HORS RESEAU

(30) Priority: 26.05.2005 US 138720
(43) Date of publication of application: 27.02.2008
(73) Proprietor: Cisco Technology, Inc., San Jose, CA 95134 (US)
(72) Inventor: BELILES, Robert, Pleasanton, CA 94566 (US); CHATTERTON, Deon, Livermore, CA 94550 (US)
(74) Representative: Kazi, Ilya
(86) International application number: PCT/US2006/020043
(87) International publication number: WO 2006/127786

(56) References cited:
- US-A1- 2003 067 386
- US-A1- 2004 068 583
- US-B1- 6 782 422
- US-B1- 6 782 422

## Description

### 1. Field of Invention

This invention relates in general to transport of data over a network. More specifically, the invention relates to methods and systems for changing the manner of how data is treated and encapsulated in a data packet or data frame header and trailer with respect to network control information (e.g. priority, security level, route path, destination address) based on dynamic external (non-network-based) conditions and state changes captured and generated by devices related to building and external environmental systems (HVAC, Lighting, Fire, Smoke, carbon monoxide, production control, etc.) and/or physical security systems or sensors (motion detection, video surveillance, door sensors, window sensors, glass break, badge access readers, biometric, etc.), and/or production control systems and media streaming systems (IP phones, intercom, video conferencing, etc.).

### 2. Description of the Background Art

Packet and frame-based networks utilize a shared medium where a large number of devices share a finite amount of transmission capacity, and other network-based resources. The transmission capacity (bandwidth) and various network resources in aggregate are commonly oversubscribed as compared to the total demands that network based devices can simultaneously require.

Packet and frame-based network devices can mark a priority level for various types of data (i.e. voice, Internet, email, etc.) in the data packet and/or data frame header and trailer control bit fields. The priority of the data can be marked using well-known industry protocols that offer Type of Service, Class of Service and/or IP-Precedence bits. Additionally, network infrastructure devices (e.g. routers, switches, etc.) can prioritize/re-prioritize data that passes through the data network. Prioritization provides a mechanism for the network infrastructure to transmit the data at the earliest possible moment, or when possible (buffered for some period of time) or in some cases, cease transmission of certain data without reaching its intended destination.

These packet and frame-based network infrastructure devices can also alter the path or route (from source to intermediate connection points to ultimate destination) data takes through the network by manipulating the data packet and/or data frame header and trailer control information bit fields. Network devices may also be able to encrypt or de-encrypt data (payload and / or other control information bit fields) or apply other network security-oriented policies as the data traverses the network.

Prioritization, route selection, duplication and redirection of data to other devices and security level of data is commonly dictated by network manager policies or well established data network protocols given network-based events (network-originated stimulus). Network-based events include, but are not limited to, network/bandwidth congestion, as well as the addition or loss of a particular network infrastructure device or link. These network protocols and policies pertaining to prioritization, route selection, destination device(s), security level may also be established on regular recurring time-based events, for example at 6pm all data shall be marked as high priority or shall take a certain route from one point to another. However, existing network protocols do not consider events or state changes that occur outside of the network or network infrastructure. These non-network-based events and stimulus are physical in nature and may be a result of detection of motion in a room, fire, exposure to or loss of light, heat, certain people entering a room, identification of a specific physical entity in a field of view at some location, presence of a certain chemical, etc. Such events or state changes do not necessarily occur or recur at precisely the same moment in time or location.

Physical security, production control, building and external environmental systems include sensors, input/output devices, such as video cameras used for monitoring, video and audio recorders, fire alarms, etc., that have the capability of recognizing certain physical-in-nature events or state changes based on motion, change in the form of a monitored object, smoke, fire, temperature, etc. (events that are not currently associated with the operation of a data network). These building environment and physical security devices can also vary the capture rate and vary output rates for information collected, based on a state change. The nature of the data does not change, just the frequency or level of detail that it is transmitted. In some cases, an event or state change will cause the sensing system to commence the capture of other and/or additional information and measurements (data).

Unlike a packet or frame-based data network, where many devices with various applications share a common network and occasionally contend for access to certain devices, most conventional physical security, production control, and building environment systems are dedicated systems and typically do not share transmission / connectivity resources with other devices not related to physical security or environmental control. Many of these systems are architected to have the capacity to support all connected devices simultaneously e.g. the physical security and building environment systems are architected to support peak bandwidth (transmission capacity). However, this type of architecture adds significant cost to support peak-demand instances rather than typical or "average" bandwidth demands. Some physical security and/or building environment systems may be able to locally buffer the output of a device until the system is capable of transmitting the output successfully. However, buffering of the output from one these system devices can diminish its value, as is the case for real-time monitoring situations.

Some physical security, production control and building environment devices digitize a given input such that it can be sent over a packet or frame-based network. Digitization can be used to provide more or less details of the information that was converted from an analog source to digital form based on sampling rate and the number of bits used to in the representation of the analog source. Once in digital form, the data can be further manipulated through a variety of means, including processed using digital data compression algorithms, content analysis, etc. These devices can also be instructed to send data (output rate) at varying intervals.

Some digital physical security, production control or building environment input / output devices can be configured to mark (assign a priority value) their output data packets with a pre-defined static priority using the Type of Service (ToS) or Class of Service (CoS) bit(s), as defined by current governing network protocols. Similarly, these devices can be assigned with static security level and route path / destination address information.

Static priority level assignments can result in unfavorable outcomes for data transport and for the ultimate users of that data. For example, if all packets from an input/output device are transmitted with a high priority level even when conditions are "normal", this result in an excessive use of network bandwidth that could otherwise be used more effectively by other network attached devices. Alternately, if all packets or frames are marked as low priority even when conditions are "abnormal" or merit an emergency designation, the information could be dropped or significantly delayed by network infrastructure devices. As a result, physical security, manufacturing process, or building environment management personnel or other system devices would not receive information on a timely basis, if at all. Similarly, static assignment of security levels and / or route path or data destination is flawed given "normal" conditions may dictate a low security level and / or data transmission via one path or one recipient. During an "event", a "normal" security level or route path, data destination may be in appropriate. For example, during an event, the data may merit the imposition of a high security level policy or a different route path or the data may need to be sent to other or multiple recipient devices.

US 6 782 422 B1 describes systems and methods for resynchronization and notification in response to network media events. US 2003/0067386 A1 describes personal alerting apparatus and methods.

### BRIEF DESCRIPTION OF THE DRAWINGS

FIG. 1 illustrates an exemplary environment wherein the present invention can be practiced.
FIG. 2 illustrates a block diagram of a facility's physical security, environment monitoring or management system or production control system, in accordance with an embodiment of the present invention.
FIG. 3 illustrates a flow chart depicting a method for transmitting data over a network that can react to non-network-based stimulus, in accordance with an exemplary embodiment of the invention.
FIG. 4 illustrates a flow chart depicting a method for changing the priority, security level, route, and/or destination and transmitting media stream over a network, in accordance with an exemplary embodiment of the invention.
FIG. 5 illustrates a detailed flow chart depicting a conventional method for transmitting data over a network without the benefit of the present invention.
FIG. 6 illustrates a detailed flow chart version of FIG. 3 depicting a method for transmitting data over a network that can react to non-network-based stimulus, in accordance with an exemplary embodiment of the invention.

### DETAILED DESCRIPTION OF THE EMBODIMENTS OF THE INVENTION

The embodiments of the invention provide a method, a system, and a computer program product for transmitting data over a network such as LAN, WAN or Internet. The network includes physical security devices such as an IP-based surveillance camera and an audio video recorder/playback device. The embodiments of the invention enable dynamically changing the priority, security level and route path or destination of data, being transmitted from the devices, based on a detected non-network based event, before transferring it over the network. The events include a change in the form of monitored devices, the motion of the monitored devices, smoke, fire, heat, air quality, etc.

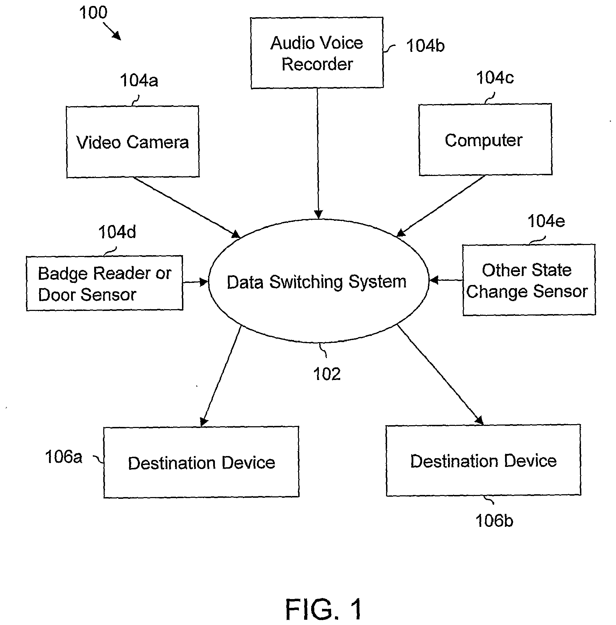

FIG. 1 illustrates an exemplary environment wherein the present invention can be practiced. The environment includes a network **100** that includes a data switching system **102** such as a router and switch, a plurality of edge devices **104 (104a, 104b, 104c, 104d and 104e),** and a plurality of destination devices **106 (106a** and **106b).** Network **100** is a packet-based or frame-based data network such as LAN, WAN or Internet, which supports prioritization, encryption and other security related functions, route path and destination device assignation of data packets and data frames. Data switching system **102** connects edge devices **104** to destination devices **106** and serves as the means of communication between them.

In various embodiments of the invention, edge devices **104** include network-based input/output devices, which have the capability of recognizing abnormal conditions such as motion, change in the form of monitored objects, smoke, fire, etc. These devices are further capable of increasing their data output rate on detection of abnormal conditions. During normal conditions, the data output rate can be kept low. In an embodiment of the invention, edge devices **104** are capable of changing the one or more parameters associated with the data. In various embodiments of the invention, the parameters include a priority bit(s), a security level, a route, and a destination device address of the data being transmitted based on detection of abnormal conditions. Examples of edge devices **104** include video recorders, audio recorders, smoke alarms, fire alarms, badge readers, etc. Edge devices **104** send the acquired data to destination devices **106** through data switching system **102.** Destination devices **106** may be computer systems, video displays, audio players, video surveillance keyboards, monitors, alarm indicator panels, etc.

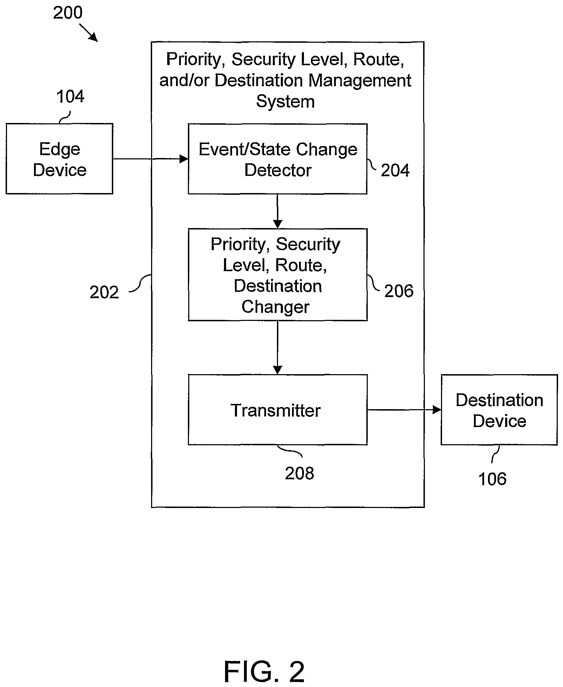

FIG. 2 illustrates a block diagram of a facility's physical security, environment monitoring/management, or production control system **200,** in accordance with an exemplary embodiment of the present invention. Facility's physical security, environment monitoring/management, or production control system **200** includes an edge device **104,** a destination device **106,** and a priority, security level, route, and/or destination management system **202.** Priority, security level, route, and/or destination management system **202** includes an event/state change detector **204,** a priority, security level, route, and/or destination changer **206,** and a transmitter **208.** Edge device **104** generates data, to transmit it to destination device **106.** The data can be, for example, an audio data stream or a video data stream. In an embodiment of the invention, edge device **104** may be capable of detecting an abnormal condition, such as motion, alarms, smoke, a physical security breach, etc., via event/state change detector **204** and then by varying the data output rate may signal priority, security level, route, and/or destination changer **206** that an event has occurred. Event/state change detector **204** may also detect an event or state change by identifying the variation in the data output rate, or through other analytical capabilities or based on alarm signaling from edge device **104.** In various embodiments of the invention, event/state change detector **204** can be a motion-recognition system or other detection system and may be a part of edge device **104** or integrated into another device that is connected to edge device **104,** which may or may not be part of the data network. The motion recognition system may recognize events such as a door opening in front of a camera, a person appearing in front of a video camera, etc.

Based on the detected event or state change, priority, security level, route, and/or destination changer **206** changes the priority, security level, route, and/or destination of the data to be transmitted from edge device **104** to destination device **106.** Priority security level, route, and/or destination changer **206** may change the layer-2 or layer-3 priority bit(s) settings, security level, route, and/or destination of the data, in accordance with an embodiment of the invention. Exemplary priority bits include the ToS priority bits supported in the Internet protocol, and the CoS priority bits supported in a network protocol such as Ethernet, as well as Frame Relay. Priority, security level, route, and/or destination changer **206** signals devices connected to data switching system **102** regarding a change in the importance, route path, and or security level of the data being transmitted. In an embodiment of the invention, this is achieved by changing the priority bit(s) settings, security level, route, and/or destination. In an embodiment of the invention, priority, security level, route, and/or destination changer **206** may reside in data switching system **102.** In another embodiment of the invention, priority, security level, route, and/or destination changer **206** may be included in edge device **104.** In various embodiments of the invention, priority, security level, route, and/or destination changer **206** may be software, firmware, or their combination thereof. Transmitter **208** transmits the data to destination device **106,** based on the changed priority, security level, route, and/or destination. In various embodiments of the invention, transmitter **208** can be a part of data switching system **102.** Data switching system **102** can be a data routing system, in accordance with an embodiment of the invention.

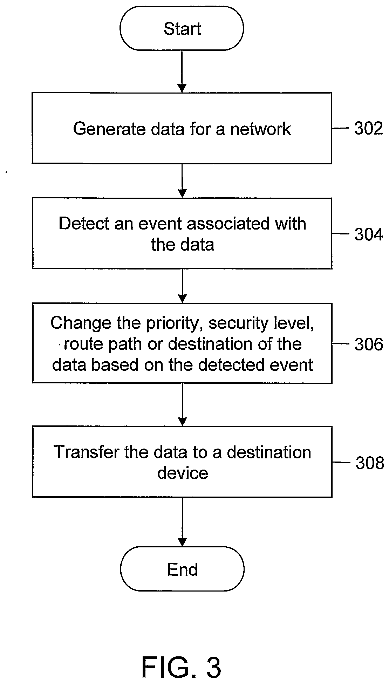

FIG. 3 illustrates a flow chart depicting a method for transmitting data over a network that can react to non-network-based stimulus, in accordance with an exemplary embodiment of the invention. At step **302,** edge device **104** generates data to be transferred to destination device **106.** Under normal conditions, edge device **104** generates data at the normal output rate. The priority, security level, route, and/or destination of the data is also normal. On detecting an abnormal condition, the data output rate may be varied. At step **304,** event/state change detector **204** detects an event associated with the data that is not a network-based event. In an embodiment of the invention, the event may be detected, based on the varied data output rate or through other means such as a door opening or closing, etc via a sensor. In another embodiment of the invention, event/state change detector **204** may detect an event, based on the data type being transmitted, or the bandwidth being used by the data. At step **306,** priority, security level, route, and/or destination changer **206** changes the priority, security level, route, and/or destination of the data, based on the detected event or state change. In an embodiment of the invention, the priority bit(s) settings, security level, route, and/or destination of the data may be changed to the highest or the next higher level, if an event is detected in the data. The priority may also be decreased if an event, that was detected earlier, is absent from the data. By changing the priority, security level, route, and/or destination of the data priority, security level, route, and/or destination changer **206** communicates to other devices the change in the importance of the data being transferred. In an embodiment of the invention, priority, security level, route, and/or destination changer **206** also prioritizes the data packet or frame acceptable latency (as defined by the priority bits and route path) in reaching the destination device as it transits the data network infrastructure as well as its security level, route, and/or destination, to support the emergency and critical data traffic over the normal network traffic. At step **308,** transmitter **208** transfers the data to destination device **106,** based on the changed priority, security level, route, and/or destination.

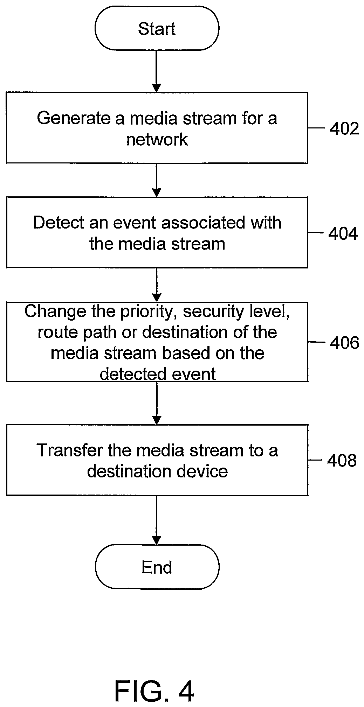

FIG. 4 illustrates a flow chart depicting a method for changing the priority, security level, route, and/or destination and transmitting a media stream over a network, in accordance with one embodiment of the invention. At step **402,** edge device **104** generates a media stream for the network. The media stream may be an audio or video stream, in accordance with an embodiment of the invention. In an embodiment of the invention, edge device **104** may be a video surveillance camera with audio capture capabilities (microphone) that generates a video and/or audio stream. Under normal conditions, edge device **104** generates the media stream at the normal output rate with normal priority, security level, etc. On detecting an abnormal condition, for example, detection of a person's movement by a video surveillance system or other monitoring device or analytical device that works with various video or environmental or product control monitoring devices, edge device **104** may vary the data output rate. The data in this case could be the image of the person in motion. Edge device **104** may also increase the resolution and frame rate of the image, in the case of video streams. At step **404,** event/state change detector **204** detects an event associated with the media stream, based on the varied data output rate or the varied resolution of the media stream or through other means such as a signal that a door opened, a light was turned on, etc. An event may also be detected, based on the varied use of bandwidth by the data. At step **406,** priority, security level, route, and/or destination changer **206** changes the priority, security level, route, and/or destination of the media stream, based on the detected event or state change. The priority bit(s) settings of the media stream may be changed to the highest or next higher level. This is done in order to prioritize the available bandwidth, to support the emergency and critical network traffic over the normal network traffic. The priority of the data may also be reduced, based on the detected event or state change. For example, once the detected event or state change comes to a halt, the priority of the data may be reduced. Similarly, the security level could go from unencrypted to encrypted or encrypted with a more secure encryption algorithm or vice-versa. The route path and ultimate set of destination devices that receive the media stream may also be changed based on the event. For example, based on the event, a guard, his supervisor, a video recorder and the police might all be sent a copy of the video stream. At step **408,** transmitter **208** transfers the media stream to destination device **106,** based on the changed priority, security level, route, and/or destination.

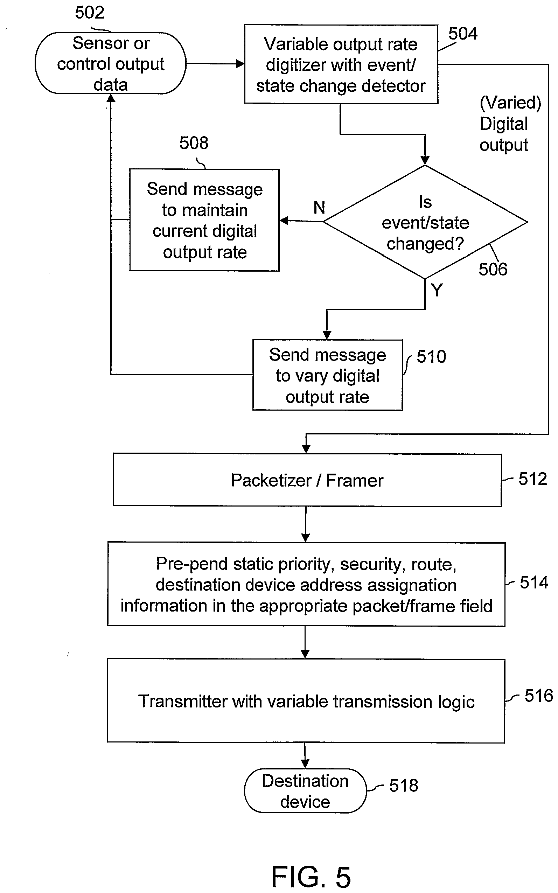

FIG. 5 depicts a conventional technique for transmitting data from a physical security, video surveillance, environmental, or production control system edge device. It should be noted that the conventional technique provides the mechanism to statically assign the same priority, security level, and/or route path and/or destination address(s) to a given data flow or media stream regardless of event detection.

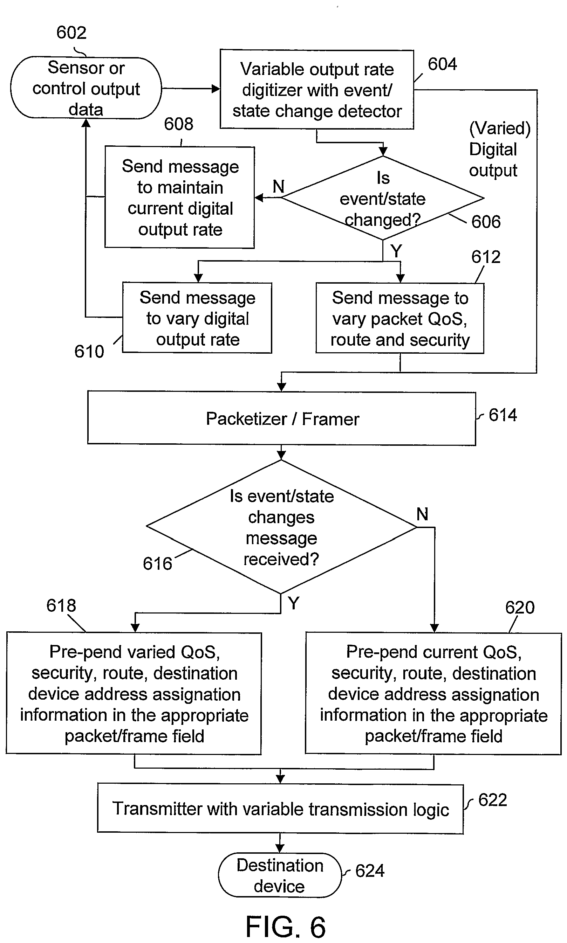

FIG. 6 depicts a system that employs a method for transmitting data over a network that can react to non-network-based stimulus, in accordance with an exemplary embodiment of the invention. At step **602,** sensor or control output data is sent to an event/state change detector. At step **604,** sensor or control output data is received by a variable output rate digitizer. The variable output rate digitizer includes event/state change detector **204.** At step **606,** event/state change detector **204** detects whether event or state change has occurred or not. If not, then at step **608,** a message is sent to edge device **104** to maintain the current digital output rate. If an event or state change is detected at step **606,** then a message is sent to edge device **104** to vary the digital output rate. Simultaneously, at step **612,** a message is sent to a packetizer/framer to vary the packet QoS, route and security. At step **614,** the packetizer/framer receives the varied digital output. At step **616,** it is checked whether an event/ state change message has been received or not. If yes, then at step **618,** one or more of varied QoS, security, route, destination device address assignation information is pre-pended in the appropriate packet/frame field. Otherwise, at step **620,** one or more of current QoS, security, route, destination device address assignation information is pre-pended in the appropriate packet/frame field. At step **622,** the sensor or control output data is sent to a transmitter with variable transmission logic. Finally, at step **624,** the sensor or control output data reaches a destination device.

The method for transmitting data can be further illustrated by using the following example. Edge device **104** includes a video camera, a telephone, and a computer, which are attached to the network that includes switches and routers that are connected to other edge devices. Edge device **104** sends data at the normal priority during normal conditions. Upon a change in the physical environment, event/state change detector **204** (the video camera or other sensing device) detects the change. As proscribed by this present method, event/state change detector **204** also signals the event changer that works with a data packetizer/framer of edge device **104** to vary the priority bits, security level, route and/or destination device address information in the data packet or data frame. The media stream is then transmitted from edge device **104** to other devices in the network. As the media stream traverses the network, routers and/or switches prioritizes transmission of the media stream based pre-determined policies, typically prioritizing data packets or data frames with higher priority bit settings for transmission ahead of data packets or frames with lower priority bit settings. The router or switch may also allocate more transmission bandwidth to data packets or frames originating from the video camera / device that has detected an event. Additionally, the routers and/or switches may also vary the security level, route path and or destination device (s) based upon the data packet or data frame header information, as part of the pre-determined policies. The priority, security level, route and/or destination device assigned to the media stream data based on the cessation of the event can be decreased to normal in all respects (frame rate, resolution, packet and/or frame prioritization, security level, etc.) by edge device **104** when event/state change detector **204** detects the absence of the event and signals the event changer to restore normal priority, security level, route and /or destination addresses to all outgoing normal event media streams. The routers and switches resume normal processing of the data packets and /or data frames sent by edge device **104.**

Embodiments of the present invention have the advantage that they allow a dynamic change in the priority, security level, route path and/or destination address of the data frames and packets, based on recognition of abnormal conditions. This ensures that critical and high-importance data is assigned the proper priority security level, etc., so that it is not delayed during a security breach and catastrophic events. Dynamic prioritization prevents wastage of bandwidth, since high priority is allotted only if an event is detected. Information (data) can be sent to other devices and entities for additional processing and action in the event of an emergency or other abnormal event. Further, the present invention allows effective differentiation between normal and critical transmissions, ensuring that proper priority is assigned to the transmission.

Although the invention has been discussed with respect to specific embodiments thereof, these embodiments are merely illustrative, and not restrictive, of the invention. For example, a 'data' being transferred over the network can include any type of audio, video or other data. The event/state change detector can be placed in other parts of the network, separate from the edge device. For example an analog edge device can be connected to a data gateway (encoder) that digitizes and packetize/frame the information (media) and then transmitted on the packet / frame-based data network. The event/state change detector can be built-in to the gateway or can be placed else where in the network as well.

Although specific protocols have been used to describe embodiments, other embodiments can use other transmission protocols or standards. Use of the terms 'peer', 'client', and 'server' can include any type of device, operation, or other process. The present invention can operate between any two processes or entities including users, devices, functional systems, or combinations of hardware and software. Peer-to-peer networks and any other networks or systems where the roles of client and server are switched, change dynamically, or are not even present, are within the scope of the invention.

Any suitable programming language can be used to implement the routines of the present invention including C, C++, Java, assembly language, etc. Different programming techniques such as procedural or object oriented can be employed. The routines can execute on a single processing device or multiple processors. Although the steps, operations, or computations may be presented in a specific order, this order may be changed in different embodiments. In some embodiments, multiple steps shown sequentially in this specification can be performed at the same time. The sequence of operations described herein can be interrupted, suspended, or otherwise controlled by another process, such as an operating system, kernel, etc. The routines can operate in an operating system environment or as stand-alone routines occupying all, or a substantial part, of the system processing.

In the description herein for embodiments of the present invention, numerous specific details are provided, such as examples of components and/or methods, to provide a thorough understanding of embodiments of the present invention. One skilled in the relevant art will recognize, however, that an embodiment of the invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention.

Also in the description herein for embodiments of the present invention, a portion of the disclosure recited in the specification contains material, which is subject to copyright protection. Computer program source code, object code, instructions, text or other functional information that is executable by a machine may be included in an appendix, tables, figures or in other forms. The copyright owner has no objection to the facsimile reproduction of the specification as filed in the Patent and Trademark Office. Otherwise all copyright rights are reserved.

A 'computer' for purposes of embodiments of the present invention may include any processor-containing device, such as a mainframe computer, personal computer, laptop, notebook, microcomputer, server, personal data manager or 'PIM' (also referred to as a personal information manager), smart cellular or other phone, so-called smart card, set-top box, or any of the like. A 'computer program' may include any suitable locally or remotely executable program or sequence of coded instructions, which are to be inserted into a computer, well known to those skilled in the art. Stated more specifically, a computer program includes an organized list of instructions that, when executed, causes the computer to behave in a predetermined manner. A computer program contains a list of ingredients (called variables) and a list of directions (called statements) that tell the computer what to do with the variables. The variables may represent numeric data, text, audio or graphical images. If a computer is employed for synchronously presenting multiple video program ID streams, such as on a display screen of the computer, the computer would have suitable instructions (e.g., source code) for allowing a user to synchronously display multiple video program ID streams in accordance with the embodiments of the present invention. Similarly, if a computer is employed for presenting other media via a suitable directly or indirectly coupled input/output (I/O) device, the computer would have suitable instructions for allowing a user to input or output (e.g., present) program code and/or data information respectively in accordance with the embodiments of the present invention.

A 'computer readable medium' for purposes of embodiments of the present invention may be any medium that can contain, store, communicate, propagate, or transport the computer program for use by or in connection with the instruction execution system apparatus, system or device. The computer readable medium can be, by way of example only but not by limitation, an electronic, magnetic, optical, electromagnetic, infrared, or semiconductor system, apparatus, system, device, propagation medium, or computer memory. The computer readable medium may have suitable instructions for synchronously presenting multiple video program ID streams, such as on a display screen, or for providing for input or presenting in accordance with various embodiments of the present invention.

Reference throughout this specification to "one embodiment", "an embodiment", or "a specific embodiment" means that a particular feature, structure, or characteristic described in connection with the embodiment is included in at least one embodiment of the present invention and not necessarily in all embodiments. Thus, respective appearances of the phrases "in one embodiment", "in an embodiment", or "in a specific embodiment" in various places throughout this specification are not necessarily referring to the same embodiment. Furthermore, the particular features, structures, or characteristics of any specific embodiment of the present invention may be combined in any suitable manner with one or more other embodiments. It is to be understood that other variations and modifications of the embodiments of the present invention described and illustrated herein are possible in light of the teachings herein and are to be considered as part of the scope of the present invention.
Further, at least some of the components of an embodiment of the invention may be implemented by using a programmed general-purpose digital computer, by using application specific integrated circuits, programmable logic devices, or field programmable gate arrays, or by using a network of interconnected components and circuits. Connections may be wired, wireless, by modem, and the like.
It will also be appreciated that one or more of the elements depicted in the drawings/figures can also be implemented in a more separated or integrated manner, or even removed or rendered as inoperable in certain cases, as is useful in accordance with a particular application.
Additionally, any signal arrows in the drawings/Figures should be considered only as exemplary, and not limiting, unless otherwise specifically noted.
Combinations of components or steps will also be considered as being noted, where Terminology is foreseen as rendering the ability to separate or combine is unclear.
As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.
The foregoing description of illustrated embodiments of the present invention, including what is described in the abstract, is not intended to be exhaustive or to limit the invention to the precise forms disclosed herein. While specific embodiments of, and examples for, the invention are described herein for illustrative purposes only, various equivalent modifications are possible within the scope of the present invention, as those skilled in the relevant art will recognize and appreciate. As indicated, these modifications may be made to the present invention in light of the foregoing description of illustrated embodiments of the present invention and are to be included within the scope of the present invention.

Thus, while the present invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope of the present invention. It is intended that the invention not be limited to the particular terms used in following claims and/or to the particular embodiment disclosed as the best mode contemplated for carrying out this invention, but that the invention will include any and all embodiments and equivalents falling within the scope of the appended claims

## Claims

1. A method for data transmission over a network (100), the method comprising generating (302) data for the network, the data being generated by an edge device (104);
detecting (304) at least one of a non-network based event and a non-network based state change associated with the data;
changing (306) one or more parameters associated with the data, including changing a priority of the data, based on the detected event or the state change,
wherein the one or more parameters associated with the data is changed by changing at least one of: the layer-2 priority bit(s) settings of the data; the layer 2 encapsulation of the data payload based on security coding and attributes of the payload identified in layer 2 of a given protocol; the layer-3 priority bit(s) settings of the data as defined by an Open Standards Interconnection reference model; and the layer 3 encapsulation of the data payload based on security coding and attributes of the payload identified in layer 3 of a given protocol; and
transmitting (308) the data to a destination device (106) based on the changed one or more parameters.

2. The method of claim 1 wherein the generated data is an audio stream.

3. The method of claim 2 wherein the event associated with the audio stream is a varied resolution and/or frame rate of the audio stream.

4. The method of claim 1 wherein the generated data is a video stream.

5. The method of claim 4 wherein the event associated with the video stream is a varied resolution and/or frame rate of the video stream.

6. A system for data transmission over a network (100) comprising at least one edge device (104) for generating data for the network;
an event/state change detector (204) for detecting a non-network based event or non-network based state change associated with the data;
a priority, security level, route, and/or destination changer (206) for changing one or more parameters associated with the data, including a priority of the data, based on the detected non-network based event or non-network based state change,
wherein the one or more parameters associated with the data is changed by changing at least one of: the layer-2 priority bit(s) settings of the data; the layer 2 encapsulation of the data payload based on security coding and attributes of the payload identified in layer 2 of a given protocol; the layer-3 priority bit(s) settings of the data as defined by an Open Standards Interconnection reference model; and the layer 3 encapsulation of the data payload based on security coding and attributes of the payload identified in layer 3 of a given protocol; and
a transmitter (208) for transmitting the data to a destination device (106) over the network based on the changed one or more parameters.

7. The system of claim 6 wherein the generated data is an audio stream.

8. The system of claim 6 wherein the generated data is a video stream.

9. The system of claim 8 wherein the event/state change detector (204) detects the event on the basis of a varied resolution of the video stream.

10. The system of claim 6 wherein the event/state change detector (204) detects the event on the basis of a variance in the frame rate of the data.

11. The system of claim 6 wherein the edge device (104) is selected from a group comprising a video recorder, an audio recorder, a fire alarm, a smoke alarm, air quality monitor, chemical composition monitor, a badge reader, and an event or state change sensor or device connected to the facility's physical security, environment monitoring or management system (200).

12. The system of claim 6 wherein the transmitter (208) comprises components that support the data link layer and physical link layer functions as specified in Open System Interconnection 7 layer networking model.

13. A machine-readable medium including instructions executable by the processor comprising one or more instructions for performing a method according to any of claims 1 to 5.

14. An apparatus for data transmission over a network (100), the apparatus comprising a processing system including a processor coupled with or independent of a display and a user input device; a machine-readable medium according to claim 13.

15. The system of Claim 6 wherein said system comprises a facility's physical security, environment monitoring/management or production control system (200) for data transmission over the network.

## Patentansprüche

1. Verfahren zur Datenübertragung über ein Netzwerk (100), wobei das Verfahren das Erzeugen (302) von Daten für das Netzwerk aufweist, wobei die Daten durch eine Edge-Vorrichtung (104) erzeugt werden;
Erkennen (304) von einem nicht netzwerkbasierten Ereignis und/oder einem nicht netzwerkbasierten Zustand, das/der mit den Daten assoziiert ist;
Ändern (306) von einem oder mehr Parametern, die mit den Daten assoziiert sind, einschließlich dem Ändern einer Priorität der Daten auf Basis des erkannten Ereignisses oder der Zustandsänderung,
wobei der eine oder die mehr mit den Daten assoziierten Parameter durch Ändern von wenigstens einem der Folgenden geändert wird: den Schicht-2-Prioritätsbiteinstellungen der Daten; der Schicht-2-Kapselung der Nutzdaten auf Basis von Sicherheitscodierung und -attributen der Nutzdaten, die in Schicht 2 eines gegebenen Protokolls identifiziert werden; den Schicht-3-Prioritätsbiteinstellungen der Daten, wie durch ein Open Standards Interconnection-Referenzmodell definiert; und der Schicht-3-Kapselung der Nutzdaten auf Basis von Sicherheitscodierung und -attributen der Nutzdaten, die in Schicht 3 eines gegebenen Protokolls identifiziert werden; und
Übertragen (308) der Daten an eine Zielvorrichtung (106) auf Basis des bzw. der geänderten einen oder mehr Parameter.

2. Verfahren nach Anspruch 1, wobei die erzeugten Daten ein Audiostrom sind.

3. Verfahren nach Anspruch 2, wobei die mit dem Audiostrom assoziierte Veranstaltung eine veränderte Auflösung und/oder Bildfrequenz des Audiostroms ist.

4. Verfahren nach Anspruch 1, wobei die erzeugten Daten ein Videostrom sind.

5. Verfahren nach Anspruch 4, wobei das mit dem Videostrom assoziierte Ereignis eine veränderte Auflösung und/oder Bildfrequenz des Videostroms ist.

6. System zur Datenübertragung über ein Netzwerk (100), das Folgendes aufweist
wenigstens eine Edge-Vorrichtung (104) zum Erzeugen von Daten für das Netzwerk aufweist;
einen Ereignis-/Zustandsänderungsdetektor (204) zum Erkennen eines nicht netzwerkbasierten Ereignisses oder einer nicht netzwerkbasierten Zustandsänderung, die mit den Daten assoziiert ist;
eine Prioritäts-, Sicherheitsstufen- Routen- und/oder Zieländerungseinheit (206) zum Ändern von einem oder mehr mit den Daten assoziierten Parametern einschließlich einer Priorität der Daten auf Basis des bzw. der erkannten nicht netzwerkbasierten Ereignisses oder nicht netzwerkbasierten Zustandsänderung,
wobei der eine oder die mehr mit den Daten assoziierte(n) Parameter durch Ändern von wenigstens einem der Folgenden geändert wird bzw. werden: den Schicht-2-Prioritätsbiteinstellungen der Daten; der Schicht-2-Kapselung der Nutzdaten auf Basis von Sicherheitscodierung und - attributen der Nutzdaten, die in Schicht 2 eines gegebenen Protokolls identifiziert werden; die Schicht-3-Prioritätsbiteinstellungen der Daten, wie durch ein Open Standards Interconnection-Referenzmodell definiert; und die Schicht-3-Kapselung der Nutzdaten auf Basis von Sicherheitscodierung und -attributen der Nutzdaten, die in Schicht 3 eines gegebenen Protokolls identifiziert werden; und
einen Sender (208) zum Übertragen der Daten über das Netzwerk an eine Zielvorrichtung (106) auf Basis des bzw. der geänderten einen oder mehr Parameter.

7. System nach Anspruch 6, wobei die erzeugten Daten ein Audiostrom sind.

8. System nach Anspruch 6, wobei die erzeugten Daten ein Videostrom sind.

9. System nach Anspruch 8, wobei der
Ereignis-/Zustandsänderungsdetektor (204) das Ereignis auf Basis einer veränderten Auflösung des Videostroms erkennt.

10. System nach Anspruch 6, wobei der
Ereignis-/Zustandsänderungsdetektor (204) das Ereignis auf der Basis einer Veränderung der Bildfrequenz der Daten erkennt.

11. System nach Anspruch 6, wobei die Edge-Vorrichtung (104) aus einer Gruppe ausgewählt ist, die einen Videorekorder, einen Audiorekorder, einen Feuermelder, einen Rauchmelder, einen Luftqualitätsmonitor, einen Monitor für chemische Zusammensetzungen, ein Ausweislesegerät und eine(n) Ereignis- oder Zustandsänderungssensor oder -vorrichtung, der bzw. die mit dem Physische-Sicherheit-, Umgebungsüberwachungs- oder -managementsystem (200) der Einrichtung verbunden ist, aufweist.

12. System nach Anspruch 6, wobei der Sender (208) Komponenten aufweist, die die Sicherungsschicht- und die Bitübertragungsschichtfunktionen, wie im 7-Schichten-Netzwerkmodell von Open System Interconnection vorgegeben, unterstützen.

13. Maschinenlesbares Medium mit durch den Prozessor abarbeitbaren Anweisungen, die eine oder mehr Anweisungen zum Durchführen eines Verfahrens nach einem der Ansprüche 1 bis 5 aufweisen.

14. Vorrichtung zur Datenübertragung über ein Netzwerk (100), wobei die Vorrichtung ein Verarbeitungssystem mit einem Prozessor, der mit bzw. von einer Anzeige und einer Benutzereingabevorrichtung gekoppelt oder unabhängig ist, ein maschinenlesbares Medium nach Anspruch 13 aufweist.

15. System nach Anspruch 6, wobei das genannte System das Physische-Sicherheit-, Umgebungsüberwachungs-/-management- oder Produktionssteuerungssystem (200) einer Einrichtung zur Datenübertragung über das Netzwerk aufweist.

## Revendications

1. Procédé de transmission de données sur un réseau (100), le procédé comportant les étapes consistant à générer (302) des données pour le réseau, les données étant générées par un dispositif périphérique (104) ;
détecter (304) au moins l'un parmi un événement hors réseau et un changement d'état hors réseau associé aux données ;
changer (306) un ou plusieurs paramètres associés aux données, comprenant l'étape consistant à changer une priorité des données, en se basant sur l'événement détecté ou le changement d'état détecté,
dans lequel lesdits un ou plusieurs paramètres associés aux données sont changés en changeant au moins l'un parmi :
les réglages de bit(s) de priorité de couche 2 des données ;
l'encapsulation de couche 2 de la charge utile des données en se basant sur un codage de sécurité et des attributs de la charge utile identifiée dans la couche 2 d'un protocole donné ; les réglages de bit(s) de priorité de couche 3 des données tels qu'ils sont définis par un modèle de référence de type à interconnexion de systèmes ouverts ; et
l'encapsulation de couche 3 de la charge utile des données en se basant sur un codage de sécurité et des attributs de la charge utile identifiée dans la couche 3 d'un protocole donné ; et
transmettre (308) les données à un dispositif de destination (106) en se basant sur lesdits un ou plusieurs paramètres changés.

2. Procédé selon la revendication 1, dans lequel les données générées sont un flux de données audio.

3. Procédé selon la revendication 2, dans lequel l'événement associé au flux de données audio est une variation de la résolution et/ou de la fréquence de trame du flux de données audio.

4. Procédé selon la revendication 1, dans lequel les données générées sont un flux de données vidéo.

5. Procédé selon la revendication 4, dans lequel l'événement associé au flux de données vidéo est une variation de la résolution et/ou de la fréquence de trame du flux de données vidéo.

6. Système de transmission de données sur un réseau (100) comportant au moins un dispositif périphérique (104) servant à générer des données pour le réseau ;
un détecteur d'événement/de changement d'état (204) servant à détecter un événement hors réseau ou un changement d'état hors réseau associé aux données ;
un dispositif de changement de priorité, de niveau de sécurité, de route, et/ou de destination (206) servant à changer un ou plusieurs paramètres associés aux données, y compris une priorité des données, en se basant sur l'événement hors réseau détecté ou le changement d'état hors réseau détecté,
dans lequel lesdits un ou plusieurs paramètres associés aux données sont changés en changeant au moins l'un parmi :
les réglages de bit(s) de priorité de couche 2 des données ;
l'encapsulation de couche 2 de la charge utile des données en se basant sur un codage de sécurité et des attributs de la charge utile identifiée dans la couche 2 d'un protocole donné ; les réglages de bit(s) de priorité de couche 3 des données tels qu'ils sont définis par un modèle de référence de type à interconnexion de systèmes ouverts ; et
l'encapsulation de couche 3 de la charge utile des données en se basant sur un codage de sécurité et des attributs de la charge utile identifiée dans la couche 3 d'un protocole donné ; et
un émetteur (208) servant transmettre les données à un dispositif de destination (106) sur le réseau en se basant sur lesdits un ou plusieurs paramètres changés.

7. Système selon la revendication 6, dans lequel les données générées sont un flux de données audio.

8. Système selon la revendication 6, dans lequel les données générées sont un flux de données vidéo.

9. Système selon la revendication 8, dans lequel le détecteur d'événement/de changement d'état (204) détecte l'événement en fonction d'une résolution variée du flux de données vidéo.

10. Système selon la revendication 6, dans lequel le détecteur d'événement/de changement d'état (204) détecte l'événement en fonction d'une variation dans la fréquence de trame des données.

11. Système selon la revendication 6, dans lequel le dispositif périphérique (104) est sélectionné dans un groupe constitué par un enregistreur vidéo, un enregistreur audio, une alarme incendie, un détecteur de fumée, une unité de surveillance de la qualité de l'air, une unité de surveillance de composition chimique, un lecteur de badges, et un capteur d'événement ou de changement d'état ou un dispositif connecté à un système de gestion ou de surveillance de l'environnement et de la sécurité physique d'une installation (200).

12. Système selon la revendication 6, dans lequel l'émetteur (208) comporte des composants qui prennent en charge les fonctions de couche de liaison de données et de couche de liaison physique tel qu'il est spécifié dans le module de réseautage de couche 7 de type à interconnexion de systèmes ouverts.

13. Support lisible par machine comprenant des instructions en mesure d'être exécutées par le processeur comportant une ou plusieurs instructions servant à effectuer un procédé selon l'une quelconque des revendications 1 à 5.

14. Appareil de transmission de données sur un réseau (100), l'appareil comportant un système de traitement comportant un processeur couplé à, ou indépendant par rapport à, un affichage et un dispositif d'entrée d'utilisateur ; un support lisible par machine selon la revendication 13.

15. Système selon la revendication 6, dans lequel ledit système comporte un système de commande de production ou de gestion/de surveillance de l'environnement et de sécurité physique d'une installation (200) servant à des fins de transmission de données sur le réseau.
